Europäisches Patentamt

European Patent Office

Office européen des brevets

(19)

(11) **EP 1 360 095 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(51) Int Cl.$^7$: **B60R 25/00**, E05B 49/00

(21) Anmeldenummer: 02710831.5

(22) Anmeldetag: **28.01.2002**

(86) Internationale Anmeldenummer:
**PCT/EP2002/001080**

(87) Internationale Veröffentlichungsnummer:
**WO 2002/064405 (22.08.2002 Gazette 2002/34)**

(54) **IDENTIFIKATIONSSYSTEM ZUM NACHWEIS EINER BERECHTIGUNG FÜR DEN ZUGANG ZU EINEM OBJEKT ODER DIE BENUTZUNG EINES OBJEKTS, INSBESONDERE EINES KRAFTFAHRZEUGS**

IDENTIFICATION SYSTEM FOR VERIFYING THE AUTHORIZATION FOR THE ACCESS TO AN OBJECT OR THE USE OF AN OBJECT, ESPECIALLY OF A MOTOR VEHICLE

SYSTEME D'IDENTIFICATION SERVANT A DETECTER UNE AUTORISATION PERMETTANT L'ACCES A UN OBJET OU L'UTILISATION D'UN OBJET, NOTAMMENT D'UNE AUTOMOBILE

(84) Benannte Vertragsstaaten:
**DE FR GB IT**

(30) Priorität: **15.02.2001 EP 01103764**

(43) Veröffentlichungstag der Anmeldung:
**12.11.2003 Patentblatt 2003/46**

(73) Patentinhaber: **SIEMENS AKTIENGESELLSCHAFT**
**80333 München (DE)**

(72) Erfinder: **OTT, Albert**
**65207 Wiesbaden-Auringen (DE)**

(56) Entgegenhaltungen:
**EP-A- 0 955 217         DE-A- 19 823 596**
**DE-A- 19 923 983        US-A- 4 250 533**

**Beschreibung**

Die Erfindung betrifft ein Identifikationssystem zum Nachweis einer Berechtigung für den Zugang zu einem Objekt oder die Benutzung eines Objekts, insbesondere eines Kraftfahrzeugs.

Funkbasierte Identifikationssysteme, auch RF-ID "radio frequency identification" Systeme genannt, finden, z.B. als Ersatz für mechanische Schlüsselsysteme, beim Zugangsschutz für Rechner oder etwa bei automatischen Zahlungssystemen zunehmenden Einsatz. Ein RFID-System besteht aus einer Identifikationsmarke (im folgenden als Codegeber bezeichnet), die auch elektronischer Schlüssel, RF-ID-Tag, ID-Geber oder ID-Karte genannt wird, die der Benutzer bei sich trägt oder die an einem zu identifizierenden Objekt angeordnet ist. Der Codegeber ist mit einem charakteristischen Code (Codeinformation) ausgestattet. Dieser Code wird über eine Basisstation (im folgenden als Sende- und Empfangseinheit bezeichnet) abgefragt und anschließend authentifiziert oder verifiziert.

Verschiedene funkbasierte Übertragungstechnologien sind möglich oder üblich: LF-Systeme im Frequenzbereich von 100-300 kHz, RF-Systeme bei 433 MHz oder 867 MHz und hochfrequente Mikrowellensysteme, die zumeist bei den Frequenzen 2,4 GHz, 5,8 GHz, 9,5 GHz oder 24 GHz arbeiten.

Man unterscheidet bei Codegebern zwischen einer aktiven und passiven Identifikation. Die passive Identifikation zeichnet sich dadurch aus, dass der Codegeber ständig, ohne Zutun des Benutzers von der Sende- und Empfangseinheit abgefragt werden kann. Befindet sich der Codegeber innerhalb eines gewissen Entfernungsbereiches zur Sende- und Empfangseinheit, so erfolgt die Kommunikation zwischen Sende- und Empfangseinheit und Codegeber automatisch oder z.B. bei manueller Betätigung einer Schalteinrichtung, z.B. durch Betätigen einer Türklinke durch den Benutzer. Die Beschränkung des Entfernungsbereiches ergibt sich im allgemeinen aus der Funkfelddämpfung.

Bei einem aktiven Identifikationssystem hingegen wird die Kommunikation aktiv vom Benutzer am Codegeber ausgelöst. Der Benutzer muss hierbei also üblicherweise zum einen den Codegeber manuell bedienen und dann z.B. zusätzlich die Türklinke betätigen. Aus Gründen eines erhöhten Komforts finden daher passive Identifikationssysteme vermehrt Anwendung.

Eine übliche und günstige Ausführung von Codegebern sind sogenannte Backscatter-Codegeber (DE 198 39 696 C2). Dabei sendet eine Sende- und Empfangseinheit ein Sendesignal (im folgenden als Abfragesignal bezeichnet) mit einer linear frequenzmodulierten Trägerwelle in Richtung des Codegebers aus. Falls der Codegeber das Abfragesignal empfängt, so wird es moduliert reflektiert, jedoch dort intern nicht weiter ausgewertet.

In der Basisstation werden Abfragesignal und Antwortsignal einerseits hinsichtlich Übereinstimmung der empfangenen Codeinformation mit einer erwarteten Codeinformation und andererseits hinsichtlich eines Frequenzversatzes (Frequenzdifferenz) von Sende- und Empfangsfrequenz ausgewertet. Der zeitliche Frequenzversatz entspricht einer zurückgelegten Funkstrecke (Signallaufzeit). Liegt die Frequenzdifferenz innerhalb eines vorgegebenen Intervalls, so wird der Codegeber als berechtigt angesehen (wenn dann auch noch der Code als berechtigt erkannt wurde) und die gewünschte Funktion wird in dem Objekt ausgelöst.

Nachteilig ist bei solchen Identifikationssystemen, dass der Übertragungskanal unbemerkt und zu einem im Prinzip beliebigen Zeitpunkt abgehört werden kann. Durch eine geeignete Einrichtung ist es einem Angreifer daher normalerweise möglich, sich den Code unbefugt zugänglich zu machen und damit die eigentlich angestrebte Schutzfunktion zu überwinden.

Bei dem bekannten Identifikationssystemen kann ein Unberechtigter einen "Spiegel" in die Nähe des Objekts bringen, durch den das Abfragesignal reflektiert wird. Da aufgrund einer geringen Frequenzdifferenz ein berechtigter Codegeber erkannt und ein Codegeber in der Nähe des Objekts vorgetäuscht wird, wird die Schutzfunktion einfach überwunden.

Aufgabe der Erfindung ist es, ein Identifikationssystem zu schaffen, das eine verbesserte Sicherheit gegen unbefugte Benutzung oder unbefugten Zugang aufweist.

Diese Aufgabe wird erfindungsgemäß durch ein Identifikationssystem gemäß Patentanspruch 1 gelöst. Dabei wird ein Triggersignal von einer objektseitig angeordneten Sende- und Empfangseinheit erzeugt und einerseits ausgesendet und andererseits zur Erzeugung eines codierten Referenzsignals verwendet. Falls ein mobiler Codegeber das Triggersignal empfängt, so erzeugt er seinerseits ein codiertes Antwortsignal, das zurück zu dem Objekt gesendet wird. In der objektseitigen Sende- und Empfangseinheit werden nun Referenzsignal und Antwortsignal miteinander korreliert und abhängig vom Maß der Übereinstimmung wird ein Freigabesignal zum Freigeben eines Sicherheitsaggregats erzeugt.

Referenzsignal und Antwortsignal werden dabei phasenmoduliert. Dies hat den Vorteil, dass neben der Codierung auch die Entfernung des Codegebers zum Objekt einen vorgegebenen Wert entsprechen muss, selbst wenn die Codierung selber als berechtigt erkannt wurde. Dadurch ist sichergestellt, dass nur Benutzer mit berechtigtem Codegeber und in der Nähe des Objekts das Objekt auch tatsächlich Zugang zu diesem finden und das Objekt auch nutzen können.

Vorteilhafte Ausgestaltungen der Erfindung sind durch die Unteransprüche wiedergegeben.

Ausführungsbeispiele der Erfindung werden im folgenden anhand der schematischen Zeichnungen näher erläutert. Es zeigen:

| | |
|---|---|
| Figur 1 | ein erfindungsgemäßes Identifikationssystem, das in einem Kraftfahrzeug angeordnet ist, |
| Figuren 2A und 2B | ein Sendesignal und ein Empfangssignal des Identifikationssystems, |
| Figur 3 | ein Korrelationssignal der beiden Signale nach den Figuren 2A und 2B, |
| Figur 4 | Blockschaltbild eines erfindungsgemäßen Identifikationssystems, und |
| Figuren 5A bis 6C | Impulsdiagramme von gesendeten und empfangenen Signale bei dem Identifikationssystem und berechnete Korrelationssignalen eines realisierten Identifikationssystems. |

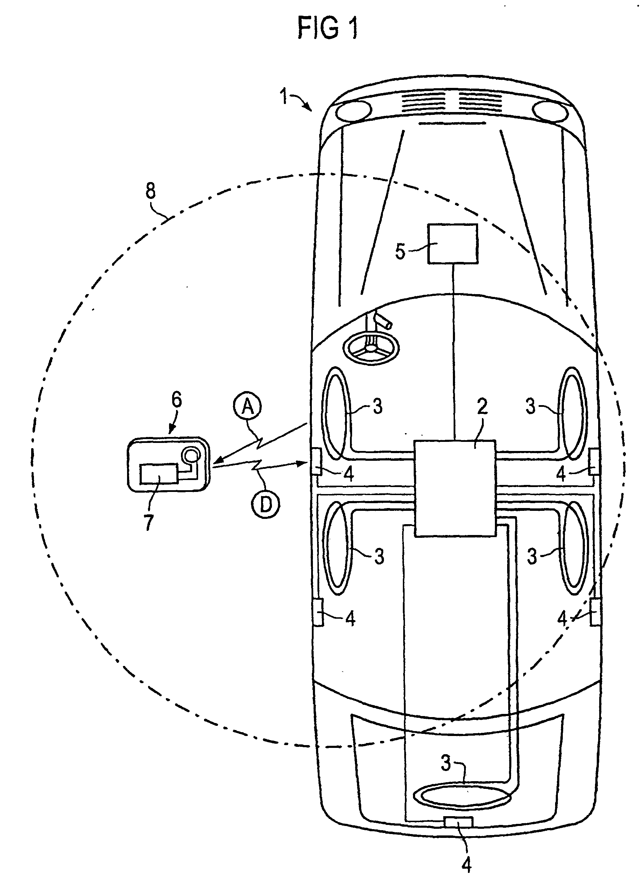

Im Folgenden wird ein Identifikationssystem zum Nachweis einer Berechtigung für den Zugang zu einem Objekt oder die Benutzung eines Objekts am Beispiel eines Kraftfahrzeugs 1 (Figur 1) als Objekt näher erläutert. Das Identifikationssystem kann selbstverständlich auch bei anderen Objekten eingesetzt werden, bei denen ein Zugang nur nach Nachweis einer Berechtigung möglich ist, wie beispielsweise bei einem Computer, einem Telefon, einem Geldautomaten, einem Gebäude, Garagen oder sonstigen zunächst versperrten Bereichen.

Das Identifikationssystem für ein Kraftfahrzeug weist eine Basisstation 2 mit einer nicht explizit dargestellten Sendeund Empfangseinheit auf, die in dem Kraftfahrzeug 1 an zentraler Stelle angeordnet ist. Die Basisstation 2 ist mit Sende- und Empfangsantennen 3 verbunden, über die Signale gesendet und empfangen werden. In dem Kraftfahrzeug 1 sind Sicherheitsaggregate (wie Türschlösser 4 für den Zugang zum Kraftfahrzeug 1 oder die Wegfahrsperre 5 (z.B. in der Motorsteuerung) für die Benutzung des Kraftfahrzeugs 1) angeordnet, die nur bei Nachweis einer Berechtigung mit Hilfe eines Freigabesignals in einen ver- oder entriegelten Zustand gesteuert werden.

Des weiteren weist das Identifikationssystem einen mobilen, tragbaren Codegeber 6 auf, der seinerseits eine Sende- und Empfangseinheit 7 aufweist. Der Codegeber 6 kann Signale empfangen und Signale aussenden. Üblicherweise wird er dazu verwendet, ein codiertes Antwortsignal auszusenden, mit dem eine Berechtigung zum Zugang oder Benutzen des Objekts nachgewiesen wird.

Bei dem vorliegenden Identifikationssystem wird nur dann eine Berechtigung nachgewiesen, wenn die Basisstation 2 das korrekt codierte Antwortsignal empfängt und sich herausstellt, dass der Codegeber 6 innerhalb einer Reichweite 8 (in der Figur 1 durch den strichpunktierten Kreis andeutungsweise dargestellt) um die sendende und/oder empfangende, objektseitigen Antenne 3 angeordnet ist. Das erfindungsgemäße Identifikationssystem wendet dabei quasi eine Entfernungsmessung und ein Codevergleich in einem einzigen Vorgang zugleich an, um eine Berechtigung für den Zugang oder die Benutzung nachzuweisen.

Die Abhängigkeit von der Entfernung / Abstand 1 (bei bekannter Lichtgeschwindigkeit c damit von der Signallaufzeit $\tau$ der Signale) als auch vom Code wird erfindungsgemäß durch Phasencodierung der Signale und Auswertung mit Hilfe der Autokorrelationsfunktion AKF oder der Kreuzkorrelationsfunktion KKF herbeigeführt.

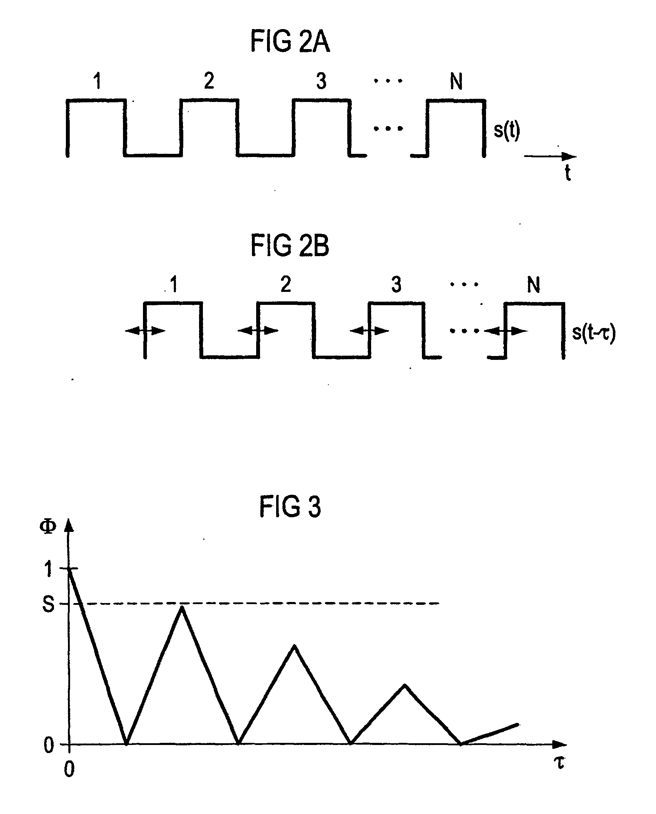

In Figur 2A ist ein impulsförmiges Sendesignal s(t) (auch als Codepuls bezeichnet) dargestellt, das beispielsweise von der Basisstation 2 ausgesendet wird. Nach einer Signallaufzeit $\tau$ wird das gleiche Signal wieder von der Basisstation 2 empfangen (Empfangssignal s(t-$\tau$)). Dies entspräche dem Fall, dass vom Kraftfahrzeug 1 das Sendesignal s(t) ausgesendet wird und das Sendesignal vom Codegeber 6 "gespiegelt" wird und zurück zur Basisstation 2 gesendet wird.

Die Signallaufzeit $\tau$ entspricht dabei der Laufzeit im freien Raum von der Sendeantenne 3 im Fahrzeug zum Codegeber 6 und zurück zur Empfangsantenne 3. Zusätzlich kann noch eine Elektroniklaufzeit in der Signallaufzeit $\tau$ enthalten sein, die durch elektronische Verarbeitung und die dafür benötigte Zeit durch die verwendeten Elektronikbaugruppen verursacht wird.

Bei dem Beispiel nach Figuren 2A und 2B ist eine Codierung noch nicht im Spiel. Wie sich eine spätere Phasencodierung auswirkt, ist durch die Doppelpfeile in der Figur 2b dargestellt (Phase der Impulse wird codeabhängig verschoben).

Die dargestellten Sendesignale s(t) und Empfangssignale s(t-$\tau$) sind Einhüllende von Hochfrequenzschwingungen, welche Trägereigenschaften haben. Die eigentliche Trägerschwingung wird jedoch in die Auswertung selbst nicht einbezogen, sondern eben nur die Einhüllende. Daher sind die Trägerschwingungen in dieser und in folgenden Figuren nicht dargestellt.

Es sei auch angenommen, dass der Codepuls (Sendesignal s(t)) aus N Einzelimpulsen besteht und periodisch ist. Die beiden Signale, und zwar das Sendesignal s(t) und das Empfangssignal s(t-$\tau$), werden in der Basisstation 2 nun miteinander verglichen. Dies geschieht mit Hilfe der bekannten Autokorrelationsfunktion $\Phi$, deren Werte mittels der beiden Signale berechnet werden.

Die berechnete AKF-Funktion $\Phi$ ist in der Figur 3 dargestellt, die sich durch Multiplikation und Integration der beiden Sende- und Empfangssignalen von Figuren 2A und 2B ergibt. Die AKF-Funktion $\Phi$ nimmt bei der Entfernung 0 (d.h. der Codegeber 6 ist unmittelbar an der Antenne 3 der Basisstation 2 angeordnet) den größten Wert an, und zwar 1. Mit zunehmenden Abstand (entsprechend der Signallaufzeit $\tau$) von der Basisstation 2 nehmen die Werte der AKF-Funktion $\Phi$ ab. Die AKF-Funktion $\Phi$ verläuft dann periodisch mit weiteren, lokalen Maxima und Minima. Die lokalen Maxima erreichen aber nie wieder den Wert 1, sondern sind deutlich kleiner als 1 und nehmen mit zunehmender Laufzeit immer mehr ab. Durch entsprechende Dimensionierung von Systemparametern kann erreicht werden, dass bereits nach dem Hauptmaximum bei der Signallaufzeit $\tau = 0$ nie mehr ein vorgegebener Schwellwert S von einem lokalen Maximum überschritten wird.

Die in der Figur 3 dargestellte AKF-Funktion $\Phi$ wurde mit Hilfe der theoretischen Signale s(t) und s(t-$\tau$) er-rechnet, wobei sich die beiden Signale lediglich durch eine Signallaufzeit voneinander unterscheiden. Wird nun dem von dem Codegeber 6 ausgesendeten Antwortsignal eine codeabhängige Phasenmodulation aufgeprägt, so sind die Maximalwerte der Korrelationsrechnung (AKF-Funktion $\Phi$) dann am größten, wenn die Modulation für beide Signale gleich ist.

Andernfalls sind die Werte der AKF-Funktion stets kleiner. Man spricht dann von einer Kreuzkorrelation KKF, obwohl beide auf dem gleichen mathematischen Grundprinzip beruhen. Somit kann eine beim Codegeber 6 verwendete Codierung, die sich von der Codierung in der Basisstation 2 unterscheidet als unterschiedlich allein anhand der AKF/KKF-Funktion erkannt werden. Daraus lässt sich schon erkennen, dass mit Hilfe der Korrelationsfunktion eine Auswertung hinsichtlich der Codierung möglich ist.

Durch entsprechende Dimensionierung lässt sich erreichen, dass auch bereits bei der kleinsten Entfernung und bei unterschiedlicher Codierung - mit Hilfe der AKF-Funktion und einem entsprechend vorgegebenen Schwellwert S - eine sichere Entscheidung dafür finden lässt, ob eine Berechtigung vorliegt oder nicht, d.h. ob eine Freigabe des Zugangs zu dem Fahrzeug oder zur Benutzung des Fahrzeugs gestattet wird oder nicht.

Falls ein Unberechtigter ein beliebiges Signal aussendet und dabei den richtigen Code nicht kennt, so kann er nie ein Freigabesignal auslösen und seine Berechtigung nachweisen, da die Werte der AKF-Funktion bei kleinen Laufzeiten $\tau$ kleiner sind als der Schwellwert S. Damit ist die Korrelation zwischen den beiden Signalen zu gering.

Die folgende Gleichung zeigt die berechnete Autokorrelationsfunktion AKF, die mit dem Sendesignal s(t) und dem Empfangssignal s(t-$\tau$) berechnen werden kann:

$$\Phi(\tau) = \lim_{T \to \infty} \frac{1}{2T} \int_{-T}^{+T} s(t) \bullet s(t - \tau) dt$$

mit der Signallaufzeit $\tau = 2\ 1/c + t_0$, die sich aus der Laufzeit 21/c im freien Raum (1 = Abstand Objekt-Codegeber 6 und c = Lichtgeschwindigkeit) und der Laufzeit $t_0$, die die Laufzeit durch die Elektronik-Baugruppen berücksichtigt, zusammensetzt, sowie der Periodendauer T und der Zeit t.

Die AKF-Funktion $\Phi$ erhält man dann, wenn der Codegeber 6 das zum Referenzsignal passende Empfangs-signal s(t-$\tau$) liefert. D.h. die Autokorrelationsfunktion wird dann angewendet, wenn das Signal mit sich selber (zwar zeitverzögert) verglichen wird. Eine KKF-Funktion $\Psi$ (Kreuzkorrelation) entsteht dagegen automatisch dann, wenn codegeberseitig nicht der richtige Code angegeben wird. Es wird zwar dann das Sendesignal s(t) ausgesendet, aber ein davon unterschiedliches Signal r(t-$\tau$) empfangen und diese beiden Signale werden miteinander bezüglich ihrer Korrelation verglichen. Abgesehen von der Signallaufzeit $\tau$ sind in einem solchen Fall Impulsdauern und/oder Periodendauer des Signals r(t-$\tau$) unterschiedlich zu denjenigen des Signals s(t).

Bei der AKF-Funktion und der KKF-Funktion werden das Referenzsignal und das empfangene Antwortsignal miteinander verglichen. Man spricht von der AKF-Funktion, wenn sich die beiden Signale nur durch die Signallaufzeit unterscheiden. Dagegen spricht man von der KKF-Funktion, wenn sich die beiden Signale auch in ihrer Codierung unterscheiden. Allgemein wird nur von Korrelation gesprochen, da sich erst im Nachhinein herausstellt, ob eine AKF oder KKF vorliegt.

Die Formel für die Kreuzkorrelationsfunktion KKF lautet wie folgt:

$$\Psi(\tau) = \lim_{T \to \infty} \frac{1}{2T} \int_{-T}^{+T} s(t) \bullet r(t - \tau) dt$$

Selbst wenn die Signallaufzeit $\tau$ bei der KKF-Funktion $\Psi$ noch im zugelassenen Bereich liegen würde (Abstand innerhalb einer vorgegebenen Reichweite), reicht bei richtiger Dimensionierung allein die Verschiedenheit der beiden Signale s(t) und r(t-$\tau$) bereits aus, dass die Werte bei der KKF-Funktion unterhalb eines vorgegebenen Schwellwerts S liegen. Die Werte unterschreiten damit den für die Freigabe des Fahrzeugs notwendigen Wert der Korrelationsrechnung.

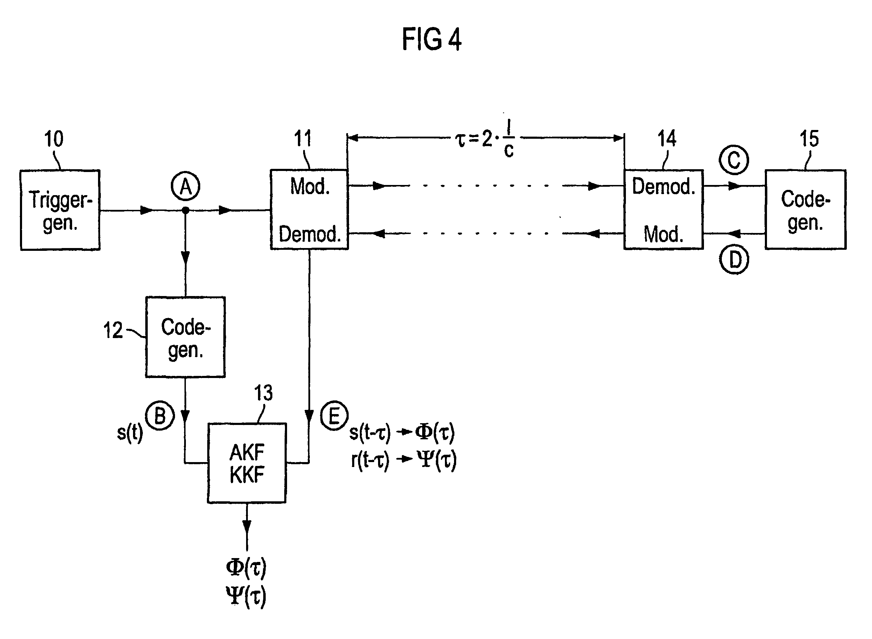

In Figur 4 ist ein Blockschaltbild eines erfindungsgemäßen Identifikationssystems dargestellt. Auf der linken Seite ist die Basisstation 2 und auf der rechten Seite der Figur 4 der Codegeber 6 angeordnet. Die Basisstation 2 weist einen Triggergenerator 10, einen Modulator/ Demodulator, einen Codegenerator 12 und eine Korrelationseinheit 13 auf. Der Codegeber 6 weist seinerseits einen Demodulator/ Modulator 14 und einen Codegenerator 15 auf.

Der Triggergenerator 10 erzeugt bei Auslösen, beispielsweise durch manuelle Betätigung des Türgriffs oder eines nicht dargestellten Schalters, ein Triggersignal A, welches in der Figur 5A dargestellt ist. Der Zeitpunkt der ersten ansteigenden Flanke des Triggersignals A ist Referenzpunkt für das Bestimmen der Signallaufzeit $\tau$.

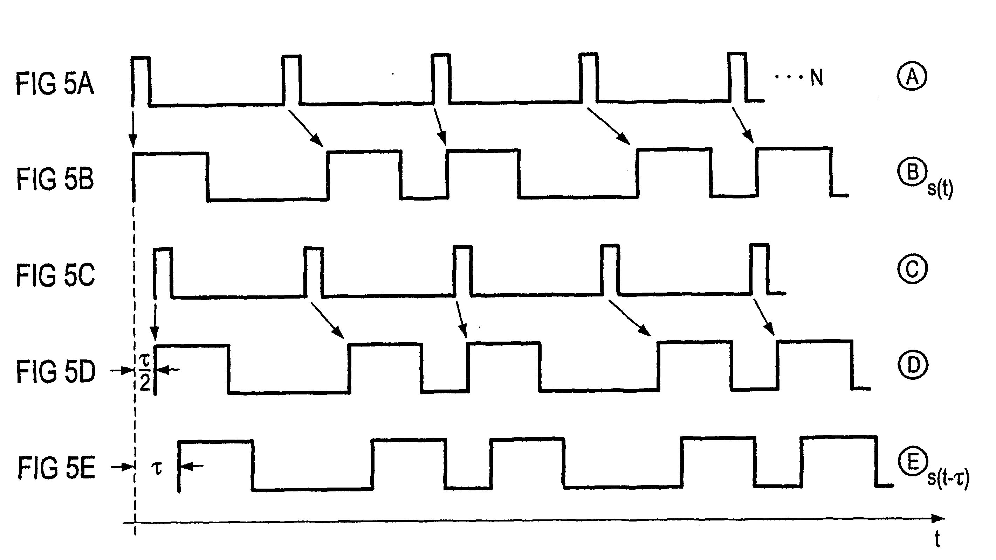

Dieses Triggersignal A wird einerseits über eine Antenne 3 moduliert ausgesendet und andererseits dem Codegenerator 12 zugeführt, um ein codiertes Referenzsignal B (Figur 5B) zu erzeugen. Der Codegeber 6 empfängt das Triggersignal nach der Signallaufzeit $\tau/2$ (Signal C in Figur 5C). Der Codegenerator 15 in dem Codegeber 6 erzeugt aus dem Triggersignal C nach dem gleichen Code wie der Codegenerator 12 der Basisstation 2 ein codiertes Antwortsignal D (Figur 5D). Das Antwortsignal D wird zurück zur Basisstation 2 gesendet, das dann als Antwortsignal E (Figur 5E) nach der Signallaufzeit $\tau$ empfangen wird.

Das Antwortsignal E (als Signal s(t-$\tau$)) und das Referenzsignal B (als Signal s(t)) werden dann miteinander verglichen, d.h. in einer Korrelations- oder Auswerteeinheit einer Korrelationsberechnung unterzogen. Es wird somit die Korrelationsfunktion oder die Korrelation zwischen den beiden Signalen berechnet. Da in das Ergebnis der Berechnung sowohl die Entfernung Codegeber-Basisstation als auch die Codierung mit einfließt, müssen beide Voraussetzungen erfüllt sein, um eine Berechtigung nachzuweisen.

Wenn der berechtigte Codegeber 6 verwendet wird, ergibt sich automatisch die AKF-Funktion bei der Korrelationsrechnung, da die beiden Codegeneratoren gleiche Strukturen der Signale B und E innerhalb eines Zyklus erzeugen. Die beiden Signale unterscheiden sich lediglich durch die Signallaufzeit $\tau$. Dementsprechend wird der Wert $\Phi(\tau)$ der AKF-Funktion bei kleiner Signallaufzeit $\tau$ einen Wert nahe bei 1 erhalten, wenn sich der Codegeber 6 innerhalb einer Reichweite von nur einigen Metern um die Basisstation 2 befindet.

Damit die Signallaufzeit $\tau$ der Signale nicht durch eine Codierung verfälscht wird, wird für Codierung eine Phasencodierung verwendet. Im vorliegenden Beispiel wird eine Impulsphasencodierung verwendet, durch die abhängig von dem Triggersignal A die ansteigenden Flanken der Signale B und D phasenverschoben werden (durch die Pfeile in den Figuren 5A - 5D angedeutet). Bei der Phasencodierung bleiben Amplitude und Impulsdauern der Signale erhalten. Es kann auch eine Impulsdauercodierung oder -modulation verwendet werden, falls ansteigende und absteigende Flanke phasenmoduliert werden (in diesem Fall ist die Impulsdauermodulation eine Sonderform der Imulsphasenmodulation).

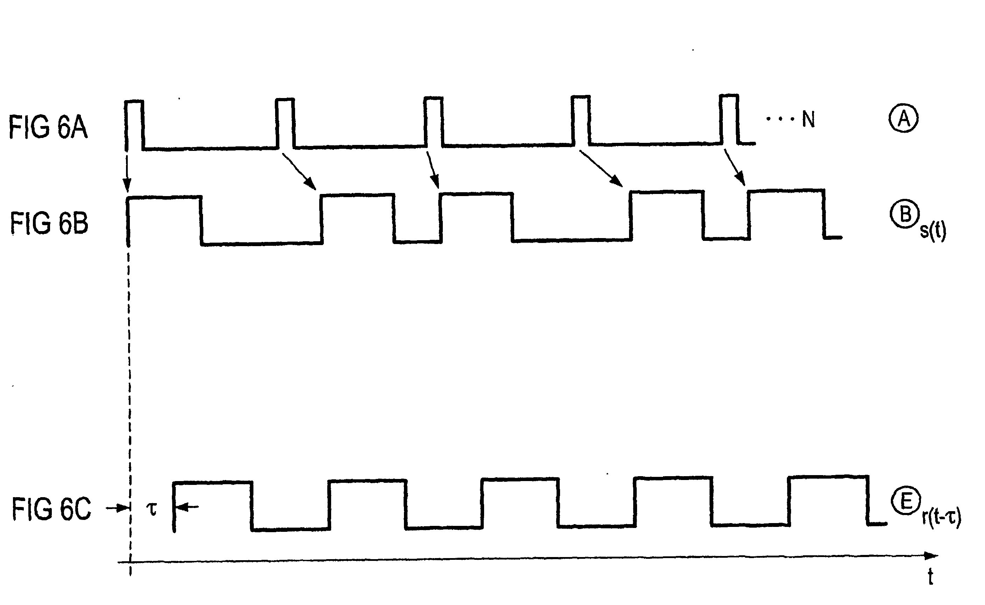

Würde ein anderer Codegeber 6 mit einem Codegenerator verwendet, dessen Code unterschiedlich von demjenigen der Basisstation 2 ist, so könnte der Benutzer mit seinem Codegeber 6 zwar in der Nähe des Kraftfahrzeugs 1 sein, jedoch sein Antwortsignal würde nicht zum Nachweis einer Berechtigung ausreichen, wie durch die Figuren 6A bis 6C verdeutlicht werden soll.

Es kann zwar das ausgesendete Triggersignal A (Figur 6A) vom Codegeber 6 empfangen und verwertet werden. Wird jedoch ein Antwortsignal E (Figur 6C) erzeugt, das keine Phasenmodulation oder eine andere Phasencodierung wie in der Basisstation 2 verwendet, so würde die Übereinstimmung des Antwortsignals E und des Referenzsignals B (Figur 6B) nur sehr gering sein, d.h. die Werte der Kreuzkorrelationsfunktion wären bei der erfassten Signallaufzeit deutlich kleiner als bei der Autokorrelationsfunktion. Ein Freigabesignal würde dann nicht erzeugt, da der Wert der Kreuzkorrelationsfunktion nicht über dem vorgegebenen Schwellwert S liegen würde.

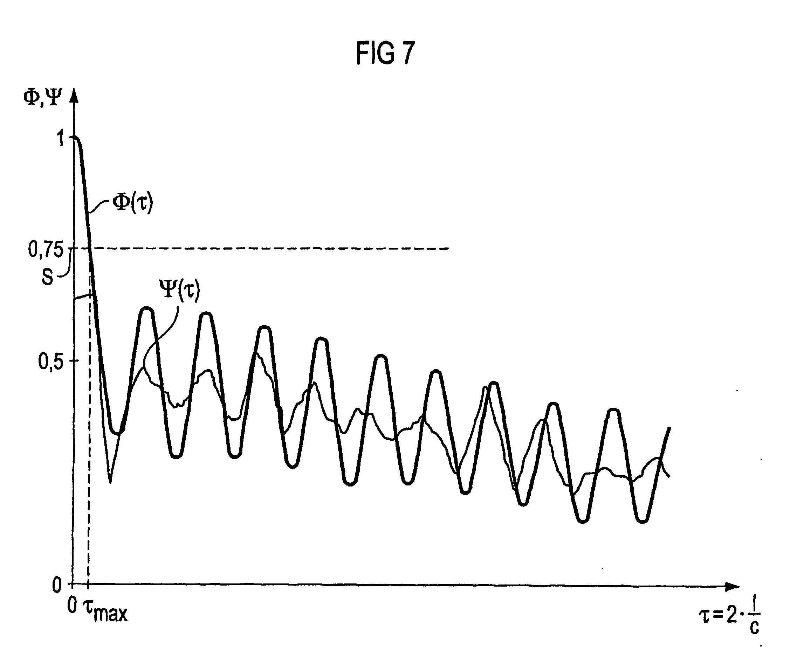

In der Figur 7 sind die Korrelationsfunktionen abhängig von der Signallaufzeit $\tau$ für ein spezielles Ausführungsbeispiel bei entsprechende Dimensionierung der Systemparameter dargestellt. Bei den Funktionen nach Figur 7 handelt es sich um Werte, die aus tatsächlich ausgesendeten und empfangenen Signalen berechnet wurden. Bei der AKF-Funktion $\Phi(\tau)$ wurde ein berechtigter Codegeber 6 verwendet, während bei der KKF-Funktion $\Psi(\tau)$ ein unberechtigter Codegeber 6 verwendet wurde, dessen Codierung nicht der berechtigten Codierung entsprach.

Bei diesem Ausführungsbeispiel wurde ein Phasenmodulationsgrad oder -index m = 0,7 und eine Impulszahl N = 20 sowohl bei dem berechtigten als auch bei dem nichtberechtigten Codegeber verwendet. Wie zu erkennen ist, liegen die Werte für die KKF-Funktion unabhängig vom Abstand oder der Signallaufzeit $\tau$ immer unter etwa 0,65. Würde man daher einen Schwellwert S von etwa 0,7 bis 0,85 für die Korrelationsfunktion verwenden, so würde nur dann ein Freigabesignal erzeugt, wenn der Wert der Korrelationsfunktion größer als dieser Schwellwert S wäre.

Dies ist dann der Fall, wenn einerseits die Codierung identisch sowohl in der Basisstation 2 als auch auf dem Codegeber 6 verwendet wird und außerdem der Abstand 1 Codegeber-Basisstation kleiner als ein vorgegebener, maximal zugelassener Abstand $l_{max}$ ist. Dieser Abstand $l_{max}$ wird üblicherweise so festgelegt, dass bei diesem Abstand $l_{max}$ der Wert der KKF-Funktion sicher immer kleiner als der Schwellwert S ist und der Wert der AKF-Funktion zwischen 0 und $l_{max}$ (d.h. zwischen 0 und der maximal zugelassenen Signallaufzeit $\tau_{max}$) immer sicher größer ist. Der Abstand $l_{max}$ sollte bei nur einigen Metern liegen. Damit ist sichergestellt, dass der berechtigte Codegeber 6 immer in der Nähe des Kraftfahrzeugs 1 sein muss, um seine Berechtigung nachzuweisen. Der Berechtigte hat dann sein Fahrzeug im Blick. Missbrauch ist dann weitgehend ausgeschlossen. Selbst wenn das Antwortsignal widerrechtlich abgehört und aus größerer Entfernung als $l_{max}$ für den Benutzer unbemerkt wiedergegeben wird, führt dies nicht zu einem Nachweis einer Berechtigung.

Die Werte der Korrelationsfunktionen hängen auch von dem Sendesignal s(t) selber ab, und zwar von der Impulszahl N. Die Anzahl der Impulszahl N kann abhängig von zwei Kriterien eingestellt werden: Die Autokorrelationsfunktion nimmt mit der Signallaufzeit τ umso schneller ab, je kleiner die Impulszahl N ist und die Codesicherheit nimmt zu, je größer die Impulszahl N ist. Abhängig von der Codesicherheit und von dem gewünschten Abstand Codegeber-Basisstation kann dann eine Impulszahl N eingestellt werden, mit der dann das Identifikationssystem betrieben wird.

Das erfindungsgemäße Identifikationssystem wird vorteilhafterweise bei einem Kraftfahrzeug eingesetzt (siehe Figur 1) und auch beispielhaft für dieses näher erläutert. Es kann aber auch bei anderen Objekten, wie Computer, Telefon, Internet, Geldautomat, gebührenpflichtige Straßen, Verkehrsmittel (Fahrkarte), Räume, Gebäude, und ähnliches verwendet werden. Es soll somit nur dann eine Berechtigung nachweisbar sein, wenn einerseits der korrekte Code verwendet wird und der Codegeber 6 auch tatsächlich in der Nähe des Objekts angeordnet ist.

In der Figur 1 sind mögliche Anbringungsorte der Antennen 3 bei Verwendung in einem Kraftfahrzeug 1 angegeben. Vorzugsweise befinden sich die Antennen 3 in den Türen oder im Kofferraumdeckel. Sie können auch im Innenspiegel, den Außenspiegeln, Stoßfängern oder an sonstigen, exponierten Stellen im Kraftfahrzeug 1 angeordnet sein.

Das Triggersignal A wird erst bei Aufforderung (beispielsweise bei Betätigen eines Schalters oder Türgriffs am Kraftfahrzeug 1) ein oder mehrfach wiederholt oder bei Annähern einer Person ausgelöst und ausgesendet. Falls der Codegeber 6 das Triggersignal empfängt, so erzeugt er das mit Hilfe des Triggersignals codierte Antwortsignal und sendet es zurück.

Nur wenn der berechnete Wert der Korrelationsfunktion über einem vorgegebenen Schwellwert S liegt (nur dann ist der Codegeber 6 nahe genug am Kraftfahrzeug 1 und verwendet auch die korrekte Codierung), so wird das Freigabesignal zum Freigeben des Sicherheitsaggregats erzeugt. Folglich kann dann das Freigabesignal das Entriegeln der Türen oder das Lösen der Wegfahrsperre 5 auslösen. Mit dem Freigabesignal können selbstverständlich auch andere Aggregate, wie benutzerspezifische Einstellungen der Sitze, Spiegel u.ä. gesteuert werden.

Die Anbringungsorte und die Anzahl der Sende- und Empfangsantennen 3 ergeben sich aus der Fahrzeuggeometrie, um den gewünschten Anforderungen hinsichtlich Erfassungsbereich (Abstand Codegeber-Basisstation), in dem sich der Codegeber 6 aufhalten sollte, und hinsichtlich des Tragekomforts des Codegebers 6 zu genügen.

Die Sende- und Empfangseinheit kann baulich eine einzige Einheit sein. Es kann auch eine Sendeeinheit und eine räumlich davon getrennte Empfangseinheit verwendet werden. Die Auswertung des Antwortsignals (Berechnen der Korrelationsfunktion) kann in der Empfangseinheit oder auch in einer separaten Auswerteeinheit geschehen.

Das erfindungsgemäße Identifikationssystem bietet zusätzlichen Schutz vor Abhören und Wiedergeben des Antwortsignals, wenn die Codierung bei jedem Aussenden gegenüber dem vorhergehenden verändert wird. Solche Veränderungen der Codierung sind bekannt und werden auch als Wechselcode oder Rollingcode bezeichnet. Da dies bekannt ist, wird darauf nicht näher eingegangen.

Bei dem erfindungsgemäßen Identifikationssystem findet vorteilhafterweise kein Vergleich der digitalisierten und demodulierten Signale statt, sondern der analogen, zeitabhängigen codierten Signale. Es interessiert dabei nicht der Codeinhalt der Signale, sondern lediglich der Wert der Übereinstimmung, der durch die Autokorrelation oder Kreuzkorrelation berechneten Werte, die abhängig von analogen, zeitabhängigen Signalen sind. Nur wenn der Wert, der bei der Korrelation berechnet wird, größer als ein Schwellwert S ist, ist die Berechtigung nachgewiesen. Daher benötigt das Identifikationssystem auch keine aufwendigen Bauteile zur digitalen Signalbearbeitung.

Bei der vorteilhaft verwendeten Pulsphasenmodulation wird die Phasenlage der Einzelimpulse eines Codepulses durch eine Information (hier Triggersignal) geändert. Die Amplitude des Codepulses und die Impulsdauer bleiben unverändert. Die Phasenverschiebung der Impulse kann durch eine Zeitauslenkung ausgedrückt werden. Der Scheitelwert der Zeitauslenkung entspricht dem Phasenhub. Der Modulationsindex oder Modulationsgrad bei einer Pulsphasenmodulation errechnet sich aus dem Scheitelwert der Zeitauslenkung dividiert durch die halbe Pulsperiodendauer.

Die objektseitige Sende- und Empfangseinheit oder die Auswerteeinheit und der Codegeber 6 können jeweils einen Speicher aufweisen, in dem jeweils das Referenzsignal und der Code (mathematischer Algorithmus oder Festcode) gespeichert sind. Der Speicher ist so ausgestaltet, dass er von außen nicht oder nur mit Berechtigung ausgelesen werden kann.

**Patentansprüche**

1. Identifikationssystem zum Nachweis einer Berechtigung für den Zugang zu einem Objekt oder die Benutzung eines Objekts, insbesondere eines Kraftfahrzeugs (1), mit

- einer objektseitig angeordneten Sende- und Empfangseinheit (2), die ein Triggersignal (A) erzeugt und aussendet, wobei mit Hilfe des Triggersignals (A) und eines festgelegten Codes ein phasencodiertes Referenzsignal (B) erzeugt wird,
- einem mobilen Codegeber (6), der das Triggersignal empfängt und mit Hilfe des empfangenen Triggersignals und eines mit dem Code der objektseitigen Sende- und Empfangseinheit übereinstimmenden Codes ein phasencodiertes Antwortsignal (D) erzeugt sowie das Antwortsignal zurücksendet, und
- einer objektseitigen Auswerteeinheit (2), die eine Korrelationseinheit aufweist, die einen Korrelationswert einer Korrelationsfunktion mit Hilfe des empfangenen Antwortsignals und des Referenzsignals (B) berechnet und die nur dann ein Freigabesignal zum Steuern eines Sicherheitsaggregats (4, 5) erzeugt, wenn der Korrelationswert größer als ein vorgegebener Schwellwert (S) ist.

2. Identifikationssystem nach Anspruch 1, **dadurch gekennzeichnet, dass** die objektseitige Sende- und Empfangseinheit (2) und/oder die Auswerteeinheit jeweils einen Speicher aufweist, in denen das Referenzsignal und der Code gespeichert sind.

3. Identifikationssystem nach Anspruch 1, **dadurch gekennzeichnet, dass** das Antwortsignal (D) phasenmoduliert mit einer Trägerfrequenz im Frequenzbereich größer als 100 kHz, vorzugsweise bei etwa 433 MHz oder etwa 868 MHz ausgesendet wird.

4. Identifikationssystem nach Anspruch 1, **dadurch gekennzeichnet, dass** die Auswerteeinheit (2) den Schwellwert (S) vorgibt, mit dem der berechnete Wert ($\Phi(\tau)$) der Korrelation verglichen wird.

**Claims**

1. Identification system for confirming authorization for access to an object or the use of an object, in particular of a motor vehicle (1), having

- a transceiver unit (2) which is arranged at the object end and which generates and emits a trigger signal (A), a phase-encoded reference signal (B) being generated using the trigger signal (A) and a defined code,
- a mobile code transmitter (6) which receives the trigger signal and generates a phase-encoded response signal (D) using the received trigger signal and a code which corresponds to the code of the object-end transceiver unit, and transmits the response signal back, and
- an object-end evaluation unit (2) which has a correlation unit which calculates a correlation value of a correlation function using the received response signal and the reference signal (B) and which generates an enable signal for controlling a security assembly (4, 5) only if the correlation value is greater than a predefined threshold value (S).

2. Identification system according to Claim 1, **characterized in that** the object-end transceiver unit (2) and/or the evaluation unit each have a memory in which the reference signal and the code are stored.

3. Identification system according to Claim 1, **characterized in that** the response signal (D) is transmitted in a phase-modulated fashion with a carrier frequency in the frequency range greater than 100 kHz, preferably at approximately 433 MHz or approximately 868 MHz.

4. Identification system according to Claim 1, **characterized in that** the evaluation unit (2) predefines the threshold value (S) with which the calculated value ($\Phi(\tau)$) of the correlation is compared.

**Revendications**

1. Système d'identification pour la preuve de l'habilitation pour l'accès à un objet ou pour l'utilisation d'un objet, en particulier d'un véhicule automobile (1), comprenant :

- une unité d'émission et de réception (2) disposée côté objet, qui produit et émet un signal de déclenchement (A), dans lequel, à l'aide du signal de déclenchement (A) et d'un code défini, un signal de référence (B) codé en phase est produit,
- un codeur mobile (6) qui reçoit le signal de déclenchement et, à l'aide du signal de déclenchement reçu et d'un code qui est en concordance avec le code d'émission et de réception côté objet, produit un signal de réponse codé en phase (D) et renvoie en retour le signal de réponse, et

- une unité d'analyse (2) côté objet, qui présente une unité de corrélation qui calcule une valeur de corrélation d'une fonction de corrélation à l'aide du signal de réponse reçu et du signal de référence (B) et qui produit un signal de validation pour la commande d'un appareil de sécurité (4, 5) seulement si la valeur de corrélation est plus grande qu'un seuil (S) prédéterminé.

2. Système d'identification selon la revendication 1, **caractérisé en ce que** l'unité d'émission et de réception côté objet (2) et/ou l'unité d'analyse présentent respectivement des mémoires dans lesquelles le signal de référence et le code sont mémorisés.

3. Système d'identification selon la revendication 1, **caractérisé en ce que** le signal de réponse (D) est émis sous la forme modulée en phase avec une fréquence porteuse contenue dans l'intervalle de fréquences supérieur à 100 kHz, de préférence d'environ 433 MHz ou d'environ 868 MHz.

4. Système d'identification selon la revendication 1, **caractérisé en ce que** l'unité d'analyse (2) définit le seuil (S) avec lequel la valeur calculée ($\Phi(\tau)$) de la corrélation est comparée.

EP 1 360 095 B1

## FIG 1

# FIG 2A

# FIG 2B

# FIG 3

FIG 4

$$\tau = 2 \cdot \frac{l}{c}$$

10 Trigger-gen.

(A)

11 Mod. Demod.

14 Demod. Mod.

(C)

(D)

15 Code-gen.

12 Code-gen.

13

$s(t)$ (B)

(E) $s(t-\tau) \rightarrow \Phi(\tau)$
$r(t-\tau) \rightarrow \Psi(\tau)$

AKF KKF

$\Phi(\tau)$
$\Psi(\tau)$

EP 1 360 095 B1

FIG 5A  Ⓐ

FIG 5B  Ⓑ $s(t)$

FIG 5C  Ⓒ

FIG 5D  Ⓓ

FIG 5E  Ⓔ $s(t-\tau)$

$\cdots N$

$\frac{\tau}{2}$

$\tau$

$t$

FIG 6A

Ⓐ

FIG 6B

Ⓑ $_{s(t)}$

FIG 6C

Ⓔ $_{r(t-\tau)}$

τ

t

··· N

EP 1 360 095 B1

## FIG 7

EP 1 360 095 B1